# EUROPÄISCHE PATENTANMELDUNG

(11) **EP 1 498 168 A1**
(43) Veröffentlichungstag der Anmeldung: **19.01.2005**
(21) Anmeldenummer: 03450271.6
(22) Anmeldetag: 04.12.2003
(51) Int. Cl.: B01D 35/30

(54) **Einrichtung zur Behandlung von Flüssigkeiten, insbesondere zur Filterung von Wasser**

(30) Priorität: 17.07.2003 AT 20031120
(71) Anmelder: BWT AKTIENGESELLSCHAFT, 5310 Mondsee (AT)
(72) Erfinder: Neubacher, Werner, 4880 St. Georgen (AT); Nachtmann, Markus, 4894 Oberhofen (AT)
(74) Vertreter: Atzwanger, Richard, Dipl.-Ing. Patentanwalt

(57) **Zusammenfassung**

Einrichtung zur Behandlung von Flüssigkeiten, insbesondere zur Filterung von Wasser, bestehend aus einem mit einem Zulauf (11) und mit einem Ablauf (12) ausgebildeten Behälter (1) aus durchsichtigem Material, innerhalb dessen sich ein Einsatz, insbesondere ein Filter (2), befindet. Dabei ist der Behälter [1] mit einer diesen umgebenden Umhüllung (3, 4) ausgebildet, welche gegenüber dem Behälter [1] verstellbar ist, wodurch eine Schauöffnung (30) freigebbar bzw. verschließbar ist [Fig.2].

## Beschreibung

Die gegenständliche Erfindung betrifft eine Einrichtung zur Behandlung von Flüssigkeiten, insbesondere zur Filterung von Wasser, bestehend aus einem mit einem Zulauf und mit einem Ablauf ausgebildetenen Behälter aus durchsichtigem Material, innerhalb dessen sich ein Einsatz, insbesondere ein Filter, befindet.

Bei bekannten derartigen Einrichtungen, bei welchen der Behälter aus durchsichtigem Material hergestellt ist, besteht die Möglichkeit, den Zustand des Einsatzes optisch zu überprüfen. So kann z.B. der Verschmutzungsgrad eines im Behälter enthaltenen Filters festgestellt werden. Diese Einrichtungen sind jedoch insoferne nachteilig, da durch das in den Behälter gelangende Licht, insbesondere durch den UV-Anteil des Lichtes, die Entwicklung der im Behälter enthaltenen Algen, Bakterien u.dgl. gefördert wird.

Der gegenständlichen Erfindung liegt somit die Aufgabe zugrunde, eine derartige Einrichtung zu schaffen, bei welcher zu dem im Behälter enthaltenen Einsatz kein Licht gelangt, wobei jedoch dessen ungeachtet die optische Überprüfung des Einsatzes ermöglicht wird. Dies wird erfindungsgemäß dadurch erzielt, daß der Behälter mit einer diesen umgebenden Umhüllung ausgebildet ist, welche gegenüber dem Behälter verstellbar ist, wodurch eine Schauöffnung freigebbar bzw. verschließbar ist.

Nach einer bevorzugten Ausführungsform besteht die Umhüllung aus zumindest zwei gegeneinander verstellbaren Teilen, wobei durch eine Verstellung der beiden Teile gegeneinander die mindestens eine Schauöffnung freigebbar bzw. verschließbar ist.

Vorzugsweise ist der Behälter, welcher röhrenförmig ausgebildet ist, mit einem diesen umgebenden feststehenden ersten Hülsenteil und einem den Behälter umschließenden, gegenüber dem ersten Hülsenteil verstellbaren zweiten Hülsenteil ausgebildet, wobei die beiden Hülsenteile mit einander zugeordneten Ausnehmungen od.dgl. ausgebildet sind, welche gegeneinander verstellbar sind, wodurch die zumindest eine Schauöffnung gebildet wird. Dabei kann der feststehende Hülsenteil von den Anschlußstutzen durchsetzt sein, wogegen der verstellbare Hülsenteil gegenüber dem Behälter verdrehbar ist. Weiters ist vorzugsweise der verdrehbare Hülsenteil an einem vom Boden des Behälters ausgehenden Stutzen, welcher zur Spülung des Einsatzes dient, verdrehbar gelagert. Nach einer bevorzugten Ausführungsform überdecken sich die beiden Hülsenteile, wobei sie in den Randbereichen mit einander zugeordneten Durchbrechungen, Ausnehmungen u.dgl. ausgebildet sind.

Der Gegenstand der Erfindung ist nachstehend anhand eines in den Zeichnungen dargestellten Ausführungsbeispieles näher erläutert. Es zeigen:
- Fig.1: eine erfindungsgemäße Einrichtung, in Vorderansicht und teilweise in einem vertikalen Schnitt, und
- Fig.2: die Einrichtung gemäß Fig.1, in Vorderansicht.

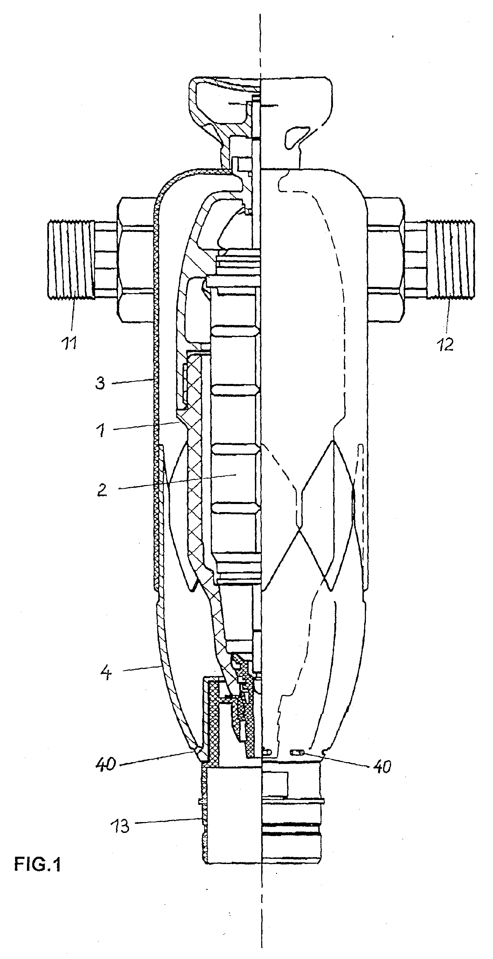

Die in Fig.1 dargestellte Einrichtung besteht aus einem röhrenförmigen Behälter 1 aus durchsichtigem Material, wie Glas oder Kunststoff, welcher mit einem Anschlußstutzen 11 für den Zulauf von Wasser und einem Anschlußstutzen 12 für den Ablauf von Wasser ausgebildet ist. Innerhalb des Behälters 1 befindet sich ein Filtereinsatz 2. Am unteren Ende des Behälters 1 befindet sich ein weiterer Stutzen 13, welcher dazu dient, ausgefiltertes Material durch Spülung aus dem Behälter 1 zu entfernen.

Da durch auf die im Filter 2 befindlichen ausgefilterten Materialien auftreffendes Licht, insbesondere durch UV-Licht, das Wachstum von in diesen Materialien enthaltenen Algen, Bakterien u.dgl. gefördert wird, besteht das Bestreben, den Behälter mittels einer Umhüllung gegenüber dem Einfall von Licht zu verschließen. Hierzu ist der Behälter 1 von einer undurchsichtigen zylindrischen Hülse umgeben. Um jedoch dessen ungeachtet eine optische Überprüfung des Zustandes des Filters 2 zu ermöglichen, ist diese Hülse durch einen oberen Hülsenteil 3 und durch einen unteren Hülsenteil 4 gebildet, wobei der obere Teil 3 mit dem Gefäß 1 fest verbunden ist, wogegen der untere Teil 4 am Stutzen 13 verdrehbar gelagert ist und somit gegenüber dem oberen Teil 3 verdrehbar ist. Die beiden Teile 3 und 4 überdecken einander im mittleren Bereich des Gefäßes 1. Am unteren Ende ist der Hülsenteil 4 mit Bohrungen 40 für den Durchtritt von Kondenswasser ausgebildet.

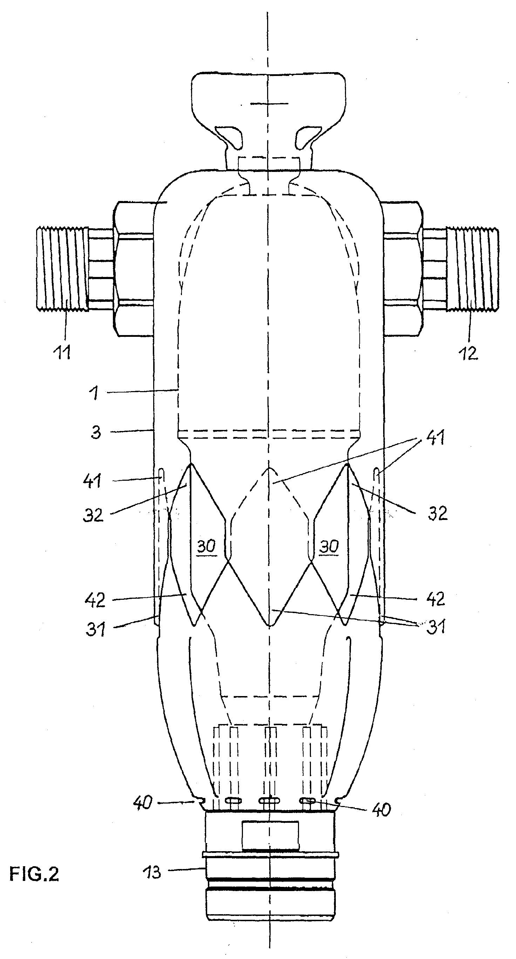

Wie dies insbesondere aus Fig.2 ersichtlich ist, sind die beiden einander überdeckenden Randbereiche der beiden Hülsenteile 3 und 4 mit einander zugeordneten Vorsprüngen 31 und 41 bzw. Ausnehmungen 32 und 42 ausgebildet. In der in Fig.2 dargestellten Drehlage des unteren Teiles 4 befinden sich die Ausnehmungen 32 und 42 vertikal übereinander, wodurch sie Öffnungen 30 bilden, durch welche das im Gefäß 1 befindliche Filter 2 sichtbar ist, wodurch dessen Zustand optisch überprüft werden kann. Sobald der Teil 4 gegenüber dem Teil 3 so verdreht wird, daß die Vorsprünge 41 in den Bereich der Ausnehmungen 32 gelangen, werden die Öffnungen 30 verschlossen, sodaß das Filter 2 gegenüber dem Zutritt von Licht geschützt ist.

Durch diese Einrichtung ist somit einerseits in einfacher Weise eine optische Überprüfung des Zustandes des Filters 2 möglich und wird andererseits das Filter 2 gegenüber einem andauernden Zutritt von Licht geschützt, wodurch eine durch Licht verursachte Förderung in der Entwicklung von Algen, Bakterien u.dgl. verhindert wird.

Eine andere Ausführungsform der Umhüllung besteht darin, daß diese nach Art eines Faltenbalges ausgebildet ist, durch dessen Verstellung das den Einsatz enthaltene Gefäß freigegeben wird, wodurch es optisch überprüft werden kann.

## Patentansprüche

1. Einrichtung zur Behandlung von Flüssigkeiten, insbesondere zur Filterung von Wasser, bestehend aus einem mit einem Zulauf (11) und mit einem Ablauf (12) ausgebildeten Behälter (1) aus durchsichtigem Material, innerhalb dessen sich ein Einsatz, insbesondere ein Filter (2), befindet, **dadurch gekennzeichnet, daß** der Behälter (1) mit einer diesen umgebenden Umhüllung (3, 4) ausgebildet ist, welche gegenüber dem Behälter (1) verstellbar ist, wodurch eine Schauöffnung (30) freigebbar bzw. verschließbar ist.

2. Einrichtung nach Patentanspruch 1, **dadurch gekennzeichnet, daß** die Umhüllung aus zumindest zwei gegeneinander verstellbaren Teilen (3, 4) besteht, wobei durch eine Verstellung der beiden Teile (3, 4) gegeneinander die zumindest eine Schauöffnung (30) freigebbar bzw. verschließbar ist.

3. Einrichtung nach Patentanspruch 2, **dadurch gekennzeichnet, daß** der Behälter (1), welcher röhrenförmig ausgebildet ist, mit einem feststehenden ersten Hülsenteil (3) und einem den Behälter (1) umschließenden, gegenüber dem ersten Hülsenteil (3) verstellbaren zweiten Hülsenteil (4) ausgebildet ist, wobei die beiden Hülsenteile (3, 4) mit einander zugeordneten Ausnehmungen (32, 42) od.dgl. ausgebildet sind, welche gegeneinander verstellbar sind, wodurch die zumindest eine Schauöffnung (30) gebildet wird.

4. Einrichtung nach Patentanspruch 3, **dadurch gekennzeichnet, daß** der feststehende Hülsenteil (3) mit dem Behälter (1) fest verbunden ist, wogegen der verstellbare Hülsenteil (4) gegenüber dem Behälter (1) verdrehbar ist.

5. Einrichtung nach Patentanspruch 4, **dadurch gekennzeichnet, daß** der verdrehbare Hülsenteil (4) an einem vom Boden des Behälters (1) ausgehenden Stutzen (13), welcher zur Spülung des Einsatzes (2) dient, verdrehbar gelagert ist.

6. Einrichtung nach einem der Patentansprüche 3 bis 5, **dadurch gekennzeichnet, daß** sich die beiden Hülsenteile (3, 4) überdecken, wobei sie in den Randbereichen mit einander zugeordneten Durchbrechungen (32, 42), Ausnehmungen u.dgl. ausgebildet sind.
